# EUROPÄISCHE PATENTSCHRIFT

(11) **EP 2 239 302 B1**
(45) Veröffentlichungstag und Bekanntmachung des Hinweises auf die Patenterteilung: **03.07.2013**
(21) Anmeldenummer: 10157337.6
(22) Anmeldetag: 23.03.2010
(51) Int. Cl.: C08L 83/04

(54) **Bei Raumtemperatur selbsthaftende Pt-katalysierte additionsvernetzende Siliconzusammensetzungen**
Pt-catalyzed, addition-crosslinking silicone compositions self-adhesive at room temperature
Shampooings doux pour le cuir chevelu et conditionneur

(30) Priorität: 06.04.2009 DE 102009002231
(43) Veröffentlichungstag der Anmeldung: 13.10.2010
(73) Patentinhaber: Wacker Chemie AG, 81737 München (DE)
(72) Erfinder: Jandke, Markus, Dr., 84508, Burgkirchen (DE); Brennenstuhl, Werner, Dr., 84508, Burgkirchen (DE)
(74) Vertreter: Mieskes, Klaus Theoderich

(56) Entgegenhaltungen:
- US-A1- 2004 053 059
- Wacker Chemie AG: "Wacker Silicones. Better yet silicones and silanes in the plastic industry"[Online] 18. April 2008 (2008-04-18), Seiten 1-15, XP002585850 Gefunden im Internet: URL:http://www.wacker.com/cms/media/public ations/downloads/5778_EN.pdf> [gefunden am 2010-06-07]

## Beschreibung

Die Erfindung betrifft bei Raumtemperatur selbsthaftende Pt-katalysierte additionsvernetzende Siliconzusammensetzungen, ihre Herstellung sowie die durch Vernetzung erhaltenen Materialien. Die erfindungsgemäßen Siliconzusammensetzungen bauen dabei selbst auf nicht-vorbehandelten Substraten rasch Haftung auf.

Die unten angeführten Begriffe werden wie folgt verstanden:

Haftung zwischen Substrat und gehärtetem Silicon wird z.B. durch Scher- und/oder Schältests bestimmt. Dabei unterscheidet man zwischen "kohäsivem und adhäsivem Bruchverhalten" welches das Erscheinungsbild der Rissbildung einer Klebeverbindung zweier Substrate nach Belastung in den o.g. Tests zeigt. Im Falle adhäsiver Rissbildung kann die Siliconschicht sauber von der Substratunterlage getrennt werden, während im Fall eines kohäsiven Erscheinungsbildes die Rissbildung ausschließlich in der Siliconschicht oder im Substrat auftritt.

Die Ausdrücke "unbehandelte Oberfläche" sowie nichtvorbehandelte Substrate" bezeichnen sowohl Substratoberflächen, die gänzlich ohne Vorbehandlung verwendet werden, als auch solche, die vor der Applikation der Siliconzusammensetzung von Staub, Verunreinigungen und Fett gereinigt wurden. Eine solche Reinigung erfolgt beispielsweise nur mit verdampfenden Lösungsmitteln. Es erfolgt keine zusätzliche Behandlung oder Grundierung der Substratoberflächen mit Siliconharz, Silicon- oder Silanschichten vor dem Auftrag der Siliconzusammensetzung.

Als "rasch härtend" werden solche Pt-katalysierte additionsvernetzenden Siliconzusammensetzungen verstanden, die nach Mischung in einer Geschwindigkeit von maximal 4 Stunden, bevorzugt innerhalb von 2 Stunden und besonders bevorzugter innerhalb von 30 min bei Raumtemperatur aushärten. Im Falle von UV-aktivierbaren Systemen werden unter "rasch" härtenden Siliconzusammensetzungen solche verstanden, die nach Mischung und Aktivierung durch UV-Licht in einer maximalen Zeitdauer von 30 min, bevorzugt 20 min und besonders bevorzugt maximal 10 min aushärten.

Unter "Aushärten" wird dabei nicht notwendigerweise das vollständige Erreichen der mechanischen Endeigenschaften verstanden. Vielmehr beschreibt dieser Begriff den Zustand des Erreichens von kohäsiven Eigenschaften, die zumindest eine zerstörungsfrei mechanische Druckbelastung des Materials zulassen.

Unter "Raumtemperatur" versteht man die Temperatur auf der Substratoberfläche bzw. des Silicons im Bereich 22-28°C.

Aus dem Stand der Technik bekannte Pt-katalysierte additionsvernetzende Siliconzusammensetzungen weisen üblicherweise keine ausreichende Haftung auf nicht-vorbehandelten Substraten auf, wenn sie bei Raumtemperatur vernetzt werden. Um eine Haftung zu erreichen, werden häufig funktionelle Propyltrialkoxysilane als Haftvermittler eingesetzt. Dies führt zur Haftung auf einer Reihe von Substraten, unter der Voraussetzung, dass eine thermische Behandlung bei einer Temperatur von mindestens 70°C, bevorzugt mindestens 100°C durchgeführt wird, wie beispielsweise in US 5,164,461 beschrieben. Wie US 5,416,144 zeigt, kann durch thermische Behandlung eine Haftung bereits in kurzer Zeit aufgebaut werden. Bei einer Vernetzung bei Raumtemperatur wird dagegen eine kohäsive Haftung erst nach Tagen erreicht wie in US 5,468,794 und US 5,380,788 beschrieben.

Bei vielen Anwendungen von Pt-katalysierten Siliconzusammensetzungen ist eine thermische Vernetzung oder Nachbehandlung nicht möglich, da aufgrund der hierfür notwendigen Ofenprozesse zusätzliche Prozesskosten und Investitionskosten anfallen oder weil die verwendeten Substrate und Komponenten keine höheren Temperaturen zulassen. Insbesondere bei Pt-katalysierten Siliconzusammensetzungen, die eine schnelle Härtung bei Raumtemperatur (< 30 min) ohne nachfolgende thermische Behandlung bieten - wie zweikomponentige Systeme oder UV-aktivierbare Systeme, fehlt daher bislang die Möglichkeit eines schnellen Haftungsaufbaus.

In WO 2006/010763 A1 werden UV-aktivierbare additionsvernetzende Siliconzusammensetzungen ganz allgemein für die Herstellung von Beschichtungen beschrieben. Es findet sich jedoch keinerlei Hinweis darüber, ob und wie eine Haftung der beschriebenen Zusammensetzungen, bzw. auf welchen Substraten eine Haftung erzielt wird.

Für den allgemeinen Bereich von UV-vernetzenden Systemen beschreibt EP 0 356 075 B1 die Verwendung eines Silans mit doppelter Trialkoxysilanfunktionalisierung in Verbindung mit einem Katalysator für eine Kondensationreaktion in einer über einen UV-Photoinitiator härtenden Polymerisationsreaktion. Kohäsive Rissbildung kann bereits nach wenigen Stunden festgestellt werden. Nachteil der Systeme ist die Notwendigkeit der Verwendung zweier unterschiedlicher Vernetzungssysteme und die Anwesenheit von Zersetzungsprodukten nach der Bestrahlung des Photoinitiators. Insbesondere in Anwendungen im Bereich elektronischer Bauteile kann es durch die Zersetzungsprodukte zu Problemen kommen.

In US 6,908,682 B2 werden Pt-katalysierte UV-aktivierbare additionsvernetzende Siliconelastomere enthaltend > 80% eines Siliconöls im Bereich Vergussmaterialien beschrieben, die moderate Abzugskräfte an Silicongelzusammensetzungen erzielen. Bei diesen Bindungen handelt es sich um eine schwache physikalische und damit reversible Adhäsion eines Gels, wie die Angaben von bis zu 4,0 N/100 mm auf Polybutylterephtalat und Polycarbonat aufzeigen. Es wird allerdings nicht erwähnt wie schnell die Haftung aufgebaut wird.

Es bestand somit die Aufgabe bei Raumtemperatur rasch vernetzende Pt-katalysierte Siliconzusammensetzungen zur Verfügung zu stellen, die bei der Erstellung von Silicon-Klebverbindungen zum Substrat eine kurze Taktzeit in industriellen Prozessen ermöglichen.

Überraschenderweise konnte diese Aufgabe gelöst werden durch additionsvernetzende Siliconzusammensetzungen enthaltend
(i) mindestens eine Verbindung ausgewählt aus der Gruppe enthaltend die Verbindungen (A), (C) und (K),
   wobei
   (A) eine siliziumorganische Verbindung, enthaltend mindestens zwei Reste mit aliphatischen Kohlenstoff-Kohlenstoff-Mehrfachbindungen,
   (C) ein siliziumorganische Verbindung, enthaltend mindestens zwei Si-gebundene Wasserstoffatome, und
   (K) eine siliziumorganische Verbindung, enthaltend SiC-gebundene Reste mit aliphatischen Kohlenstoff-Kohlenstoff-Mehrfachbindungen und Si-gebundene Wasserstoffatome, bedeuten,
      mit der Maßgabe, dass die Zusammensetzung mindestens eine Verbindung mit aliphatischen Kohlenstoff-Kohlenstoff-Mehrfachbindungen und mindestens eine Verbindung mit Sigebundenen Wasserstoffatomen enthält, und
(ii) mindestens einen Platinkatalysator (E) in katalytischen Mengen und
(iii)mindestens ein α-Silan (H) der allgemeinen Formel (I)

   Y-CH₂-SiR^{'}ₙ(OR)₃₋ₙ (I)
wobei
- Y: ein Glycidoxy-, Methacryloxy-, Vinyl-,
- R: ein Alkyl, oder substituiertes Alkyl, Acetoxy, Propionyloxy mit 1-6 Kohlenstoffatomen,
- R': eine Methylgruppe, und
- n: eine 0 oder 1 bedeutet.

Die erfindungsgemäßen Siliconzusammensetzungen haben den Vorteil eines raschen Haftungsaufbaus bei der Erstellung von Silicon-Klebverbindungen auf verschiedenen Substraten, und ermöglichen so kurze Taktzeiten bei industriellen Produktionsprozessen. Es erfolgt ein schneller Haftungsaufbau innerhalb von maximal 2 h, bevorzugt maximal 1 h nach Mischung bzw. Mischung und UV-Aktivierung.

Die sich bei Raumtemperatur innerhalb kurzer Zeit ausbildende Haftung bei den erfindungsgemäßen Siliconzusammensetzungen wird überraschenderweise durch die erfindungsgemäß enthaltenen funktionellen α-Silane (H), die die Wirkung eines Haftvermittlers haben, erreicht. Im Folgenden sind einige Beispiele für Substrate aufgezählt, bei denen gute Haftergebnisse erzielt wurden: Polybutylenterephtalat, Polyamid und Polycarbonat.

Bei der Verbindung (A) handelt es sich bevorzugt um vinylfunktionalisierte Polydiorganosiloxane mit einem Vinylgehalt von 0,002 bis 2 Gew.-% (0,2-3 mol%) und einer Viskosität von 100 - 1.000.000 mPas. Es kann eine einzelne Verbindung (A) oder eine Mischung mindestens zweier verschiedener vinylfunktionalisierter Polydiorganosiloxane eingesetzt werden.

Geeignet für die erfindungsgemäßen Zusammensetzungen sind insbesondere solche Polyorganosiloxane (A), die mindestens eine oder mehrere Vinylgruppen pro Molekül enthalten. Insbesondere vorteilhaft für die Umsetzung der vorliegenden Erfindung sind solche vinylsubstituierten Polyorganopolysiloxane, die zwei terminale Vinylgruppen pro Molekül enthalten. Verwendung finden können auch solche Polydiorganopolysiloxane, bei denen das Siliciumatom mit Methylgruppen oder/und Phenylgruppen substituiert ist. Besonders bevorzugt sind Polydimethylpolysiloxane.

Bei der Verbindung (C) handelt es sich bevorzugt um Si-H enthaltende Polyorganosiloxane, die einen H-Gehalt von 0,001-2 Gew.-%, eine Viskosität von 1-10000 mPas und mindestens 2 Si-gebundene H-Atome pro Molekül aufweisen. Solche Verbindungen sind aus dem Stand der Technik allgemein bekannt. Im Falle der Verwendung von Si-H enthaltenen Polyorganosiloxanen mit 2 terminalen Si-H-Gruppierungen wird ein Polymerkettenaufbau realisiert, der für die Klebeeigenschaften der ausgehärteten Formulierung besonders vorteilhaft ist. Üblicherweise beträgt das molare Verhältnis von SiH / Si-Vinyl(=Vi)-Gruppierungen aus (C) und (A) 0,5: 1 bis 10:1. Die Vernetzungsgeschwindigkeit, Härte und insbesondere die Haftungseigenschaften können zudem durch einen entsprechenden Gehalt an Si-H funktionellen Polyorganosiloxanen, die mehr als 3 Si-H Gruppierungen pro Molekül enthalten gesteuert werden. Molare Verhältnisse Si-H/Vi aus der Gesamtformulierung liegen dabei bevorzugt im Bereich 0,5:1 - 10:1.

Es kann eine einzelne Verbindung (C) oder eine Mischung aus mindestens zwei verschiedenen Verbindungen eingesetzt werden. In einer bevorzugten Ausführungsform werden beispielsweise 1-50 Teile (C) mit mindestens 2 H-Atomen pro Molekül zusammen mit 0-30 Teilen eines (C) mit mindestens 3 H-Atomen pro Molekül, bezogen auf 100 Teile A, eingesetzt.

Verbindungen (K) sind dem Fachmann aus dem Stand der Technik allgemein bekannt. Falls Verbindungen (K) eingesetzt werden, handelt es sich vorzugsweise um solche aus Einheiten der allgemeinen Formeln 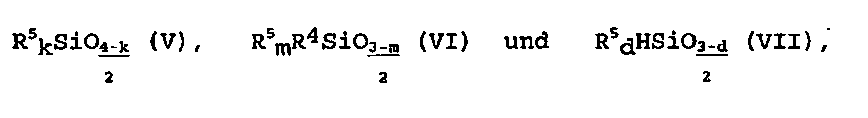 wobei
R⁵ einen einwertigen, gegebenenfalls substituierten, von aliphatischen Kohlenstoff-Kohlenstoff-Mehrfachbindungen freien Kohlenwasserstoffrest mit 1 bis 18 Kohlenstoffatomen je Rest
und
R⁴ einen einwertigen Kohlenwasserstoffrest mit terminaler, aliphatischer Kohlenstoff-Kohlenstoff-Mehrfachbindung mit 2
bis 8 Kohlenstoffatomen je Rest,
k 0, 1, 2 oder 3,
m 0, 1 oder 2,
d 0, 1 oder 2,
bedeuten,
mit der Maßgabe, dass durchschnittlich mindestens 2 Reste R⁴ und durchschnittlich mindestens 2 Si-gebundene Wasserstoffatome vorliegen.

Es kann eine einzelne Verbindung (K) oder eine Mischung aus mindestens zwei Verbindungen (K) eingesetzt werden.

In den erfindungsgemäßen additionsvernetzenden Zusammensetzungen sind folgende Kombinationen möglich: (A)+(C) oder (A)+(K) oder (C)+(K) oder (A)+(C)+(K) oder (K) alleine.

Beispiele für geeignete Verbindungen (E) sind u.a. in den folgenden Patentschriften offenbart US 3,814,730 (Karstedt), US 2,823,218, US 3,220,972, US 3,814,731, US 4,276,252, US 4,177,341 sowie DE 10 2008 000 156 auf die ausdrücklich Bezug genommen wird. Der Pt-Katalysator (E) sollte vorzugsweise in einer katalytisch ausreichenden Menge verwendet werden, die die Hydrosilylierungsreaktion in ausreichender Geschwindigkeit bei Raumtemperatur ermöglicht. Typischerweise werden 0,5 bis 100 ppm des Katalysators bezogen auf den Gehalt des Pt-Metalls zur gesamten Hydrosilylierungsmischung verwendet. Soweit notwendig oder zielführend ist auch die Verwendung von Inhibitoren, wie unter (G) beschrieben, sinnvoll.

Bevorzugt werden als Pt-Katalysator (E) UV-aktivierbare Pt-Katalysatoren eingesetzt, die unter Lichtausschluß inaktiv sind und nach Bestrahlung mit Licht einer Wellenlänge von 250-500 nm in bei Raumtemperatur aktive Pt-Katalysatoren überführt werden können. Solche Katalysatoren sind im Stand der Technik bekannt. Beispiele für geeignete UV-aktivierbare Pt-Katalysatoren sind (η⁵-cyclopentadienyl)trialiphatische Pt-Verbindungen oder deren Derivate wie beispielsweise in EP 0 146 307 B1 offenbart. Besonders geeignet sind Cyclopentadienyltrimethylplatin, Methylcyclopentadienyltrimethylplatin sowie Derivate davon, die substituierte Cyclopentadienylgruppierungen enthalten, welche optional direkt oder über weitere zusätzliche Gruppierungen an Polymere gebunden werden können. Weitere geeignete photo-aktive Hydrosiylierungskatalysatoren (E) sind Bis(acetylacetonato)Platinverbindungen sowie deren entsprechenden Derivate.

Es kann eine einzelner Katalysator (E) oder eine Mischung aus mindestens zweien eingesetzt werden.

Die erfindungsgemäßen Siliconzusammensetzungen können weiterhin 0 bis 200 Teile eines mechanisch verstärkenden Füllstoffs (F) enthalten. Es kann eine einzelne Verbindung (F) oder eine Mischung aus mindestens 2 eingesetzt werden. Mechanisch verstärkende Füllstoffe (F) im Sinne der vorliegenden Erfindung sind z.B. jegliche Formen aktiv verstärkender Füllstoffe wie z.B. gefällte oder pyrogene Kieselsäure (Siliciumdioxid) bzw. deren Gemische. Die aktiv verstärkenden Füllstoffe weisen dabei eine spezifische Oberfläche von mindestens 50 m²/g, bevorzugt 100-400 m²/g gemäß BET-Methode auf. Die genannten Kieselsäurefüllstoffe können hydrophilen Charakter haben oder nach bekannten Verfahren hydrophobiert sein. Beim Einmischen hydrophiler Füllstoffe ist die Zugabe eines Hydrophobierungsmittels erforderlich.

Weitere Additive im Sinne der vorliegenden Erfindung sind Indikatoren, die durch Veränderung ihrer Eigenschaften wie Farbe, Absorption, Fluoreszenz das Ende der Vernetzungsreaktion bzw. die Einstrahlung der für die Vernetzung notwendigen UV-Lichtdosis anzeigen. Entsprechende Indikatoren sind z.B. durch die EP 1 437 392 A1 oder US 4,780,393 beschrieben.

Die erfindungsgemäße Siliconzusammensetzung kann wahlweise als Bestandteile (G) weitere Zusätze enthalten. Es kann eine einzelne Verbindung (G) oder eine Mischung aus mindestens 2 eingesetzt werden. Sie werden bevorzugt zu einem Anteil von 0 bis zu 100 Teilen eingesetzt. Diese Zusätze (G) sind beispielsweise Inhibitoren, Stabilisatoren, inaktive Füllstoffe, harzartige Polyorganosiloxane, die von den Siloxanen (A), (C) und (K) verschieden sind, Silane die von (H) verschieden sind, nicht verstärkende Füllstoffe, Haftvermittler, Fungizide, Duftstoffe, rheologische Additive, Korrosionsinhibitoren, Oxidationsinhibitoren, Lichtschutzmittel, flammabweisend machende Mittel und Mittel zur Beeinflussung der elektrischen Eigenschaften Dispergierhilfsmittel, Lösungsmittel, Haftvermittler, Pigmente, Farbstoffe, Weichmacher, organische Polymere, Hitzestabilisatoren usw. sein. Hierzu zählen Zusätze, wie Aktivkohle, Quarzmehl, Diatomeenerde, Tone, Kreide, Lithopone, Ruße, Graphit, Metalloxide, Metallcarbonate, -sulfate, Metallsalze von Carbonsäuren, Metallstäube, Fasern, wie beispielsweise Glasfasern, Kunststoffasern, Kunststoffpulver, Metallstäube, Farbstoffe, Pigmente usw.

Werden harzartige Polyorganosiloxane (G) eingesetzt, so sind diese bevorzugt in 0-40 Teilen enthalten, Wobei vinylfunktionalisierte Harze enthaltend R ³₃SiO_{1/2} (M-) und SiO_{4/2} (Q-)-Einheiten sowie optional R³₂ SiO_{2/2} und R³SiO_{3/2}- (T-)-Struktureinheiten bevorzugt werden und wobei R³ unabhängig voneinander eine Vinylgruppe oder eine Methylgruppe bedeutet. Solche vinylfunktionalisierten MQ-Harze haben einen Vinylgehalt von 0,05-4 Gew.-%.

Beispiele für geeignete Inhibitoren (G) sind, 1-Ethinyl-1-cyclohexanol, 2-Methyl-3-butin-2-ol, 3,5-Dimethyl-1-hexin-3-ol, 3-Methyl-1-dodecin-3-ol, Polymethylvinylcyclosiloxane wie 1,3,5,7-Tetravinyltetramethyltetracyclosiloxan, Divinyltetramethyldisiloxan, Tetravinyldimethyldisiloxan, Trialkylcyanurate, Alkylmaleate, organische Sulfoxide, organische Amine, Diamine, Phosphane und Phosphite, Nitrile, Diaziridine und Oxime Acetylenverbindungen, Phosphite, Maleate, Amine oder Alkohole mit denen man eine gezielte Einstellung der Verarbeitungszeit, Anspringtemperatur und Vernetzungsgeschwindigkeit der erfindungsgemäßen Zusammensetzungen erreichen kann.

Nichtaktive oder funktionelle Füllstoffe (G) im Sinne der vorliegenden Erfindung sind typischerweise wärmeleitende Füllstoffe, wie Al₂O₃, AlN, BN, SiC, ZnO sowie weitere Füllstoffe wie TiO₂, SiO₂, Fe₂O₃, Fe₃O₄, Quartzmehl, Kreiden, Talke, Diatomenerden, Zeolithe, elektrisch leitfähige Füllstoffe Ag, Russe, Graphit, Metalloxide, funktionelle Nanopartikel, Hohlkugeln usw. Die genannten Füllstoffe können hydrophobiert sein, beispielsweise durch deren Behandlung mit Organosilanen- bzw. -siloxane, mit Stearinsäure oder anderen Agenzien. Für UV-härtende Zusammensetzungen kommen von den genannten funktionellen Füllstoffen insbesondere diejenigen in Frage, die eine Transmission von Licht im Wellenlängenbereich von 250-500 nm ermöglichen. Der maximale Füllgrad ergibt sich aus der aufzubringenden Schichtdicke und der maximal möglichen UV-Lichtintensität.

Für eine Reihe von Anwendungen ist die Stabilität der Haftung unter thermischer und Feuchtbeanspruchung gefordert. Diese spezielle Eigenschaft lässt sich z.B. durch die zusätzliche Verwendung von aus dem Stand der Technik allgemein bekannter Haftvermittler (G) erreichen. Beispielsweise sind geeignete Haftvermittler (G) solche auf der Basis von trialkoxyfunktionellen Silanen wie etwa Methacryloxypropyltrimethoxysilan, Methacryloxypropyltriethoxysilan, Glycidoxypropyltrimethoxysilan, Glycidoxypropyltriethoxysilan, tris(3-propyltrimethoxysilyl)isocyanurat, Trimethoxysilylpropylbernsteinsäureanhydrid, Allyltrimethoxysilan.

Von der Verbindung (H) werden 0,1-6 Gew.-%, bevorzugt 0,6-3 Gew.-% bezogen auf die Formulierung A)-G) eingesetzt. (H) ist ein α-Silan mit der allgemeinen Formel (I)

Y-CH₂-SiR^{'}ₙ(OR)₃₋ₙ (I)

wobei
- Y: die Gruppierungen Glycidoxy, Methacryloxy, Vinyl,
- R: Alkyl, oder substituiertes Alkyl, Acetoxy, Propionyloxy mit 1-6 Kohlenstoffatomen
- R': eine Methylgruppe
- n: eine 0 oder 1 bedeuten.

Die Mengenverhältnisse der einzelnen Verbindungen (A) - (G) sind dem Fachmann aus dem Stand der Technik bekannt. Eine mögliche Ausführungsform der erfindungsgemäßen Siliconzusammensetzung enthält 100 Teile (A), 1-30 Teile (C), 0,5 bis 100 ppm (E) und 0,1 - 12 Teile (H).

Die erfindungsgemäßen additionshärtenden Siliconelastomerzusammensetzungen können beispielsweise im Bereich Vergussmassen, Kleb- und Dichtstoffe angewendet werden.

Die raumtemperaturvernetzenden Zusammensetzungen gemäß der vorliegenden Erfindung können als Klebstoff oder adhäsives Dichtungsmaterial auf einer Vielzahl von Substraten eingesetzt werden, solange diese vor und während des Aushärteprozesses mit den Siliconzusammensetzungen in Kontakt sind.

Die Geschwindigkeit des Haftungsaufbaus hängt dabei im wesentlichen von Diffusionsprozessen des Haftvermittlermoleküls zur Substratoberfläche und von der Reaktivität des eingesetzten Haftvermittlers an der Oberfläche gegenüber dort vorhandenen funktionellen Gruppen wie Hydroxy- oder Carboxy (sowie deren Oberflächendichte) ab. Eine Optimierung der Substratanbindung des Haftvermittlers kann zum einen über eine Erhöhung der Verweilzeit des Haftvermittlers vor/oder während der Vernetzungsreaktion erreicht werden. Aus Gründen der Wirtschaftlichkeit ist allerdings eine rasche Verarbeitung, Vernetzung und damit auch ein rascher Haftungsaufbau gewünscht. Durch Erhöhung der Temperatur lässt sich ebenfalls die Diffusionsgeschwindigkeit, Löslichkeit und auch Reaktivität des Haftvermittlers im System verbessern. Allerdings möchte man in vielen industriellen Anwendungen von Klebstoffzusammensetzungen von additionsvernetzenden Siliconelastomeren keine erhöhten Temperaturen oder Ofenprozesse einsetzen. Wesentlich für einen schnellen Haftungsaufbau ist daher eine erhöhte Reaktivität der eingesetzten Haftvermittler bei Raumtemperatur. Die erfindungsgemäß eingesetzten α-Silane (H) erfüllen diese Anforderung durch ihre Wirkung als Haftvermittler. Insbesondere bevorzugt ist der Einsatz von Methacryloxymethyltrimethoxy-oder -triethoxysilanen. Die Haftung wird innerhalb von 2 Stunden, in bevorzugten Ausführungsformen innerhalb von 1 h nach Mischung bzw. nach Mischung und UV-Bestrahlung bei Raumtemperatur erreicht und ist zu diesem Zeitpunkt bereits so stark, dass unter Belastung kohäsives Versagen beobachtet wird.

Substrate im Sinne der vorliegenden Erfindung sind solche, die Anwendung finden im Bereich Beschichten, Vergießen, Verkleben und Abdichten von Verbundmaterialien, Metall-, Kunststoff oder Keramikbauteilen, Gehäusen oder Bauteilen für elektrische, elektronische, optische Anwendungen etc. Für einen Haftungsaufbau ist das Vorhandensein einer entsprechenden Menge an polaren Gruppen auf der Oberfläche des Substrates essentiell. Prinzipiell anwendbar sind daher die erfindungsgemäßen Zusammensetzungen auch auf solchen Substratoberflächen, die durch einen zusätzlichen Vorbehandlungsschritt mit dem Experten vertrauten Prozessen wie Grundierung, Plasmabehandlung, Pyrosilbehandlung (Silanpyrolyse), CO₂-Bestrahlung, Corona-behandlung, Ozonbehandlung, Laservorbehandlung aktiviert werden. In einigen Anwendungsfällen ist eine zusätzliche Vorbehandlung des Substrates nicht erwünscht. Insbesondere in diesen Fällen lassen sich die erfindungsgemäßen Zusammensetzungen vorteilhaft zur Erreichung eines schnellen Haftungsaufbaus einsetzen. Eine Reinigung, Entfettung der Substratoberflächen wird im Sinne der vorliegenden Erfindung nicht als Vorbehandlungschritt definiert, sondern die so verwendete Oberfläche als prinzipiell "unbehandelt" betrachtet.

Typische Substrate, auf die die erfindungsgemäßen Zusammensetzungen appliziert werden sind beispielsweise Polybutylenterephtalat (PBT); Polyethylenterephtalat (PET), Polyethylennaphtalat (PEN), Polyamid (PA); Polyphenylensulfid (PPS), Polycarbonat (PC), ABS-Kunststoff, Polyimid, Keramische Oberflächen, Aluminium, Stahl und so weiter.

Im einfachsten Fall werden die erfindungsgemäßen raumtemperaturvernetzenden Siliconzusammensetzungen durch gleichmäßiges Vermischen aller Komponenten erhalten.
Im Falle der erfindungsgemäßen Zusammensetzungen, die ohne UV-Aktivierung eine rasche Vernetzung bei Raumtemperatur ermöglichen, sind 2-komponentige Zusammensetzungen bevorzugt. Aufgrund der Tatsache, dass bei diesen Systemen die Katalysatorkomponente (E) von den Si-H-funktionellen Verbindungen (B) bzw. (K) getrennt werden kann, ist die Gewährleistung einer ausreichenden Lagerstabilität sowie gleichzeitig eine hohe Reaktivität des Systems möglich, da erst nach dem Mischen der Komponenten eine schnelle Härtung erfolgt. Das Mischen erfolgt vor dem Auftragen auf das Substrat beispielsweise mit bekannten 2-Komponenten Dosieranlagen mit statischen oder dynamischen Mischsystemen.

UV-aktivierbare erfindungsgemäße Zusammensetzungen können sowohl als ein- oder zweikomponentige Zusammensetzungen verwendet werden. Hier erfolgt die Aktivierung des Katalysators erst durch die Bestrahlung mit UV-Licht.

Im Falle der UV-aktivierbaren Zusammensetzungen hängt die typische Vernetzungszeit von Parametern ab, wie der spezifischen Zusammensetzung, der UV-Transparenz der Zusammensetzung, der Schichtdicke des applizierten Silicons, der Reflektivität und möglichen inhibierenden Wirkung des Substrats, der Wellenlänge des eingestrahlten Lichts, dem Absorptionsbereich des katalytischen System, der einwirkenden UV-Intensität sowie Dosis ab. Typischerweise werden für Verklebungen im Bereich elektronischer Bauelemente raupenförmige Klebestrukturen/Geometrien mit einer Schichtdicke von 0,03 - 1,5 cm, bevorzugt 0,03 cm - 0,5 cm aufgebracht.

Unter einer raschen Vernetzung werden für die UV-aktivierbaren Zusammensetzungen Härtungszeiten von weniger als 20 min, bevorzugt weniger als 10 min verstanden. Für die Aushärtung der erfindungsgemäßen Zusammensetzungen wird Licht der Wellenlänge 250 nm - 500 nm, bevorzugt 250 nm - 350 nm, benutzt. Die eingestrahlte UV-Intensität bzw. Dosis liegt dabei zwischen 30 mW/cm² bis 2000 mW/cm² bzw. 150 mJ/cm² bis 10000 mJ/cm². Typischerweise werden UV-Dosen von 300 mJ /cm² und 5000 mJ/cm² verwendet. Eine Dosis unter 200 mJ/cm² kann je nach Formulierung zu einer zu langsamen oder nur unvollständigen Aushärtung führen. Eine zu hohe Dosis führt in der Regel zu einer zu schnellen Vernetzung und damit zu einer zu kurzen Offenzeit, um die zu verklebenden Substrate fügen zu können sowie ggf. zu einer unzureichenden Reaktionszeit des Haftvermittlers für den Haftungsaufbau. Dem Fachmann ist bekannt, dass die zu wählende optimale UV-Dosis je nach Formulierung auf die entsprechend gewünschte Vernetzungszeit und Haftung im genannten Rahmen abgestimmt werden kann.

### Beispiele

In den nachstehend beschriebenen Beispielen beziehen sich alle Angaben von Teilen und Prozentsätzen, falls nicht anders angegeben, auf das Gewicht. Des Weiteren beziehen sich alle Viskositätsangaben auf eine Temperatur von 25°C. Sofern nicht anders angegeben, werden die nachstehenden Beispiele bei einem Druck der umgebenden Atmosphäre, also etwa 1020 hPa, und bei Raumtemperatur, also bei etwa 20°C, bzw. bei einer Temperatur, die sich beim Zusammengeben der Reaktanden bei Raumtemperatur ohne zusätzliche Heizung oder Kühlung einstellt, durchgeführt.

Erfindungsgemäßes Beispiel 1a)
Tabelle 1 zeigt eine erfindungsgemäße Zusammensetzung 1a)

**Tabelle 1**

| | **Bestandteile** | **Gew.-%** | **Mol H/g** | **Mol Vinyl/g** | **Beitrag** |
|---|---|---|---|---|---|
| (A) | Vinyl-terminiertes Polydimethylsiloxan (mittlere Kettenlänge ca. 200, 700-1300 mPas) | 63,7 | | 0,0125 | 0,80 |
| (C) | Si-H-terminiertes Polydimethyl-siloxan), 2 Si-H pro Molekül 1-50 mPas, Kettenlänge 10-20 | 4,6 | 0,20 | | 0,92 |
| (C) | Organohydrogenpolysiloxan, mindestens 3 Si-H pro Molekül, 20-50 mPas, Kettenlänge 20-30 | 2,4 | 0,77 | | 1,85 |
| (E) | Pt-Katalysator (Platin-Divinyltetramethyl-disiloxan-Komplex) | 15 ppm Pt | | | - |
| (F) | hydrophobierte Kieselsäure (BET 300 m²/g) | 27,2 | | | - |
| (G) | Divinyltetramethyldisiloxan | 0,04 | | 0,01075 | 0,004 |
| (H) | α-Methacryloxymethyltrimet hoxy-silan | 2 | | | - |
| | | | | | |
| | Summe | | | SiH /SiVi | 3,4 |

Nicht-Erfindungsgemäßes Beispiel 1b)
Tabelle 2 zeigt eine nicht-erfindungsgemäße Zusammensetzung 1b)

**Tabelle 2**

| | **Bestandteile** | **Gew.-%** | **Mol H/g** | **Mol Vinyl/g** | **Beitrag** |
|---|---|---|---|---|---|
| (A) | Vinyl-terminiertes Polydimethylsiloxan (mittlere Kettenlänge ca. 200, 700-1300 mPas) | 63,7 | | 0,0125 | 0,80 |
| (C) | Si-H-terminiertes Polydimethyl-siloxan), 2 Si-H pro Molekül 1-50 mPas, Kettenlänge 10-20 | 4,6 | 0,20 | | 0,92 |
| (C) | Organohydrogenpolysiloxan, mindestens 3 Si-H pro Molekül, 20-50 mPas, Kettenlänge 20-30 | 2,4 | 0,77 | | 1,85 |
| (E) | UV-aktiver Pt-Katalysator η⁵-Methylcyclopentadienyl-trimethylplatin | 30 ppm Pt | | | - |
| (F) | hydrophobierte Kieselsäure (BET 300 m²/g) | 27,2 | | | - |
| (G) | Divinyltetramethyldisiloxan | 0,04 | | 0,01075 | 0,004 |
| (H) | Glycidoxypropyltrimethoxy-silan | 2 | | | - |
| | | | | | |
| | Summe | | | SiH /SiVi | 3,4 |

Erfindungsgemäßes Beispiel 1c)
Tabelle 3 zeigt eine erfindungsgemäße Zusammensetzung 1c)

**Tabelle 3**

| | **Bestandteile** | **Gew.-%** | **Mol H/g** | **Mol Vinyl/g** | **Beitrag** |
|---|---|---|---|---|---|
| (A) | Vinyl-terminiertes Polydimethylsiloxan (mittlere Kettenlänge ca. 200, 700-1300 mPas) | 63,7 | | 0,0125 | 0,80 |
| (C) | Si-H-terminiertes Polydimethyl-siloxan), 2 Si-H pro Molekül 1-50 mPas, Kettenlänge 10-20 | 4,6 | 0,20 | | 0,92 |
| (C) | Organohydrogenpolysiloxan, mindestens 3 Si-H pro Molekül, 20-50 mPas, Kettenlänge 20-30 | 2,4 | 0,77 | | 1,85 |
| (E) | UV-aktiver Pt-Katalysator η⁵-Methylcyclopentadienyl-trimethylplatin | 30 ppm Pt | | | - |
| (F) | hydrophobierte Kieselsäure (BET 300 m²/g) | 27,2 | | | - |
| (G) | Divinyltetramethyldisiloxan | 0,04 | | 0,01075 | 0,004 |
| (H) | α-Methacryloxymethyltri-methoxysilan | 2 | | | - |
| | | | | | |
| | Summe | | | SiH /SiVi | 3,4 |

Nicht-erfindungsgemäßes Beispiel 1d)
Tabelle 4 zeigt eine nicht-erfindungsgemäße Zusammensetzung 1d)

**Tabelle 4**

| | **Bestandteile** | **Gew.-%** | **Mol H/g** | **Mol vinyl/g** | **Beitrag** |
|---|---|---|---|---|---|
| (A) | Vinyl-terminiertes Polydimethylsiloxan (mittlere Kettenlänge ca. 200, 700-1300 mPas) | 65,3 | | 0,0125 | 0,82 |
| (C) | Si-H-terminiertes Polydimethylsiloxan), 2 Si-H pro Molekül 1-50 mPas, Kettenlänge 10-20 | - | | | - |
| (C) | Organohydrogenpolysiloxan, mindestens 3 Si-H pro Molekül | 2,4 | 0,77 | | 1,85 |
| | • 0-50 mPas, Kettenlänge 20-30 | 1,3 | 1,15 | | 1,50 |
| | • 20-70 mPas, Kettenlänge 45-60 | | | | |
| (E) | Pt-Katalysator (Platin-Divinyltetramethyl-disiloxan-Komplex) | 10 ppm Pt | | | - |
| (F) | hydrophobierte Kieselsäure (BET 300 m²/g) | 28,9 | | | - |
| (G) | Divinyltetramethyldisiloxan | 0,04 | | 0,01075 | 0,004 |
| (H) | Glycidoxypropyltrimethoxy-silan | 2 | | | - |
| | | | | | |
| | Summe | | | SiH /SiVi | 4,1 |

Erfindungsgemäßes Beispiel 2a)
Tabelle 5 zeigt eine erfindungsgemäße Zusammensetzung 2a)

**Tabelle 5**

| | **Bestandteile** | **Gew.-%** | **Mol H/g** | **Mol Vinyl/g** | **Beitrag** |
|---|---|---|---|---|---|
| (A) | Vinyl-terminiertes Polydimethylsiloxan | | | | |
| | • 700-1300 mPas, Kettenlänge 200 | 52,5 | | 0,0042 | 0,23 |
| | • 100-200 mPas Kettenlänge 100-120 | 11,3 | | 0,027 | 0,31 |
| (C) | Si-H-terminiertes Polydimethyl-siloxan) , 2 Si-H pro Molekül 1-50 mPas, Kettenlänge 10-20 | 9,0 | 0,18 | | 1,62 |
| (C) | Organohydrogenpolysiloxan, mindestens 3 Si-H pro Molekül | 0,7 | 0,77 | | 0,54 |
| | • 20-50 mPas, Kettenlänge 20-30 | 1,0 | 1,15 | | 1,15 |
| | • 0-70 mPas, Kettenlänge 45-60 | | | | |
| (E) | UV-aktiver Pt-Katalysator η⁵-Methylcyclopentadienyl-trimethylplatin | 30 ppm Pt | | | - |
| (F) | hydrophobierte Kieselsäure (BET 300 m²/g) | 23,4 | | | - |
| (G) | Divinyltetramethyldisiloxan | 0,04 | | 0,01075 | 0,004 |
| (H) | α-Methacryloxymethyltrietho xysilan | 2,0 | | | - |
| | | | | | |
| | | | | SiH/SiVi | 6,1 |

Nicht-erfindungsgemäßes Beispiel 2b)
Tabelle 6 zeigt eine nicht-erfindungsgemäße Zusammensetzung 2b)

**Tabelle 6**

| | **Bestandteile** | **Gew.-%** | **Mol H/g** | **Mol Vinyl/g** | **Beitrag** |
|---|---|---|---|---|---|
| (A) | Vinyl-terminiertes Polydimethylsiloxan | | | | |
| | • 700-1300 mPas, Kettenlänge 200 | 52,5 | | 0,0042 | 0,23 |
| | • 100-200 mPas Kettenlänge 100-120 | 11,3 | | 0,027 | 0,31 |
| (C) | Si-H-terminiertes Polydimethyl-siloxan) , 2 Si-H pro Molekül 1-50 mPas, Kettenlänge 10-20 | - | - | | - |
| (C) | Organohydrogenpolysiloxan, mindestens 3 Si-H pro Molekül | 2,8 | 0,77 | | 2,16 |
| | • 20-50 mPas, Kettenlänge 20-30 | 3,0 | 1,15 | | 3,45 |
| | • 20-70 mPas, Kettenlänge 45-60 | | | | |
| (E) | UV-aktiver Pt-Katalysator η⁵-Methylcyclopentadienyl-trimethylplatin | 30 ppm Pt | | | - |
| (F) | hydrophobierte HDK (BET 300 m²/g) | 24,4 | | | - |
| (G) | Divinyltetramethyldisiloxan | 0,04 | | 0,01075 | 0,004 |
| (H) | α-Methacryloxymethyltri-ethoxysilan | 2,0 | | | - |
| | | | | | |
| | | | | SiH/SiVi | 10,4 |

Erfindungsgemäßes Beispiel 2c)
Tabelle 7 zeigt eine erfindungsgemäße Zusammensetzung 2c).

**Tabelle 7**

| | **Bestandteile** | **Gew.-%** | **Mol H/g** | **Mol Vinyl/g** | **Beitrag** |
|---|---|---|---|---|---|
| (A) | Vinyl-terminiertes Polydimethylsiloxan | | | | |
| | • 700-1300 mPas, Kettenlänge 200 | 52,5 | | 0,0042 | 0,23 |
| | • 100-200 mPas Kettenlänge 100-120 | 11,3 | | 0,027 | 0,31 |
| (C) | Si-H-terminiertes Polydimethyl-siloxan), 2 Si-H pro Molekül 1-50 mPas, Kettenlänge 10-20 | 9,0 | 0,18 | | 1,62 |
| (C) | Organohydrogenpolysiloxan, mindestens 3 Si-H pro Molekül | 0,7 | 0,77 | | 0,54 |
| | • 20-50 mPas, Kettenlänge 20-30 | 1,0 | 1,15 | | 1,15 |
| | • 20-70 mPas, Kettenlänge 45-60 | | | | |
| (E) | Pt-Katalysator (Platin-Divinyltetramethyl-disiloxan-Komplex) | 15 ppm Pt | | | - |
| (F) | hydrophobierte HDK (BET 300 m²/g) | 23,4 | | | - |
| (G) | Divinyltetramethyldisiloxan | 0,04 | | 0,01075 | 0,004 |
| (H) | α-Methacryloxymethyltriethox ysilan | 2 | | | - |
| | | | | | |
| | | | | SiH/SiVi | 6,1 |

### Herstellung der in den Tabellen 1 - 7 aufgeführten Zusammensetzungen:

Die Herstellung erfolgte durch Verwendung von Vormischungen aus vinylhaltigem Siloxan (A) und hydrophobierter Kieselsäure (F). Durch Zugabe der weiteren Bestandteile wurde mittels Labormischer eine homogene Mischung erzeugt, wobei der Pt-Katalysator (E) im Falle der 2-komponentigen Mischungen über eine Vormischung mit Vinylpolymer (A) erst direkt vor der Applikation zugemischt wurde. Die in den Tabellen 1 - 7 angegebenen Mischungen stellen die jeweiligen Zusammensetzungen der applizierten Mischungen dar.

### Verarbeitung

Die Mischungen werden mittels Spatel auf vorgereinigte und getrocknete Substrate (Plättchenform 2,5x 5 cm) bei Raumtemperatur aufgetragen, so dass sich zunächst eine Schichtdicke von 0,5-1 cm ergibt. Die Vorreinigung der Substrate erfolgt durch Waschen der Substrate mit Isopropanol und anschließender Trocknung.

### 2-komponentige bei Raumtemperatur vernetzende Systeme

Die beschichteten Substrate werden sofort über einer Fläche von 2,5 x 1 cm mit einem entsprechenden weiteren Substrat abgedeckt (resultierende Schichtdicke ca. 0,5 mm). Nach ca. 30 min wird mit der Bestimmung des Bruchbildes nach Belastung begonnen. Hierzu werden(pro Zusammensetzung 6-8 Proben) alle 10 min an jeweils einer der wie vorstehend beschrieben präparierten Proben die beiden Überstehenden Enden der Substrate manuell in einer Schälbewegung bis zum rechten Winkel relativ gegeneinander belastet, bevor das Bruchverhalten untersucht wird.

### UV-aktive bei Raumtemperatur vernetzende Systeme

Es werden 6-8 Substrate wie oben beschrieben beschichtet und mit UV-Licht (Fe-Strahler 250-350 nm) der Intensität 140 mW/cm² für 10 sec bei Raumtemperatur bestrahlt. Nach der Bestrahlung werden die Substrate sofort mit den entsprechenden Gegenplättchen gefügt, so dass sich eine Siliconschichtdicke von ca. 0,5 mm ergibt. Ca. 10 min nach der Bestrahlung wird mit der manuellen Schälbelastung der Substrate zur Beurteilung des Bruchverhaltens begonnen.

In den Tabellen 8 bis 9 bedeutet:
A- Adhesives Bruchbild
C+ Kohäsives Bruchbild

In der Tabelle 8 sind die Ergebnisse der Haftungsversuche auf PBT (Polybutylenterephtalat) angegeben.

**Tabelle 8**

| Formulierung | 1a) | 1b) | 1c) | 1d) | 2a) | 2b) | 2c) |
|---|---|---|---|---|---|---|---|
| | | | | | | | |
| Erfindungsgemäß | + | - | + | - | + | - | + |
| Bruchbild | | | | | | | |
| 5 min | | | | | | | |
| 10 min | | | A - | | C+ | | |
| 20 min | | A - | C + | | C + | A - | |
| 30 min | A - | A - | C + | A - | C + | A - | A - |
| 40 min | A- | A- | C + | A- | C+ | A- | A- |
| 50 min | A - | | C + | A - | C + | | C + |
| 60 min | C + | A - | | A - | | A - | C + |
| 2 h | C + | A - | C + | A - | C + | A - | C + |
| 6 h | C + | A- | C + | A- | C + | A - | C + |
| 1 d | C + | C + | C + | A - | C + | A - | C + |
| 2 d | C + | C + | C + | A - | C + | A - | C + |

In der Tabelle 9 sind die Ergebnisse der Haftungsversuche auf
PA (Polyamid) angegeben.

**Tabelle 9**

| Formulierung | 1a) | 1b) | 1c) | 1d) | 2a) | 2b) | 2c) |
|---|---|---|---|---|---|---|---|
| | | | | | | | |
| Erfindungsgemäß | + | - | + | - | + | - | + |
| Bruchbild | | | | | | | |
| 5 min | | | | | | | |
| 10 min | | | A- | | A - | A - | |
| 20 min | | A - | A - | | A - | A - | |
| 30 min | A - | A - | A - | A - | A - | A - | A- |
| 40 min | A - | A - | A - | A - | C + | A - | A- |
| 50 min | A- | | C + | A - | C + | A - | C+ |
| 60 min | C + | A - | C + | A - | C + | A - | C+ |
| 2 h | C + | A - | C + | A - | C + | A - | C+ |
| 6 h | C + | C+ | C + | A - | C + | A - | |
| 1 d | C + | C + | | A - | | | C+ |
| 2 d | C + | C + | C + | A - | C + | A - | C+ |

Aus den Tabellen 8 und 9 geht eindeutig hervor, dass nur die erfindungsgemäßen Zusammensetzungen 1a), 1c), 2a) und 2c) nach spätestens 60 Minuten ein kohäsives Bruchbild und damit ein entsprechend feste Bindung an das Substrat erreichen.

## Patentansprüche

1. Additionsvernetzende Siliconzusammensetzungen enthaltend
(i) mindestens eine Verbindung ausgewählt aus der Gruppe enthaltend die Verbindungen (A), (C) und (K),
wobei
(A) eine siliziumorganische Verbindung, enthaltend mindestens zwei Reste mit aliphatischen Kohlenstoff-Kohlenstoff-Mehrfachbindungen,
(C) ein siliziumorganische Verbindung, enthaltend mindestens zwei Si-gebundene Wasserstoffatome, und
(K) eine siliziumorganische Verbindung, enthaltend SiC-gebundene Reste mit aliphatischen Kohlenstoff - Kohlenstoff-Mehrfachbindungen und Si-gebundene Wasserstoffatome,
bedeuten,
mit der Maßgabe, dass die Zusammensetzung mindestens eine Verbindung mit aliphatischen Kohlenstoff-Kohlenstoff-Mehrfachbindungen und mindestens eine Verbindung mit sigebundenen Wasserstoffatomen enthält,
(ii) mindestens einen Platinkatalysator (E) in katalytischen Mengen und
(iii)mindestens ein α-Silan (H) der allgemeinen Formel (I)
Y-CH₂-SiR'ₙ(OR)₃₋ₙ (I)
wobei
Y ein Glycidoxy-, Methacryloxy-, Vinyl-,
R ein Alkyl, oder substituiertes Alkyl, Acetoxy, Propionyloxy mit 1-6 Kohlenstoffatomen,
R' eine Methylgruppe, und
n eine 0 oder 1
bedeutet.

2. Additionsvernetzende Siliconzusammensetzungen gemäß Anspruch 1, **dadurch gekennzeichnet, dass** sie als weiteren Bestandteil
(iv) mindestens einen mechanisch verstärkenden Füllstoff (F) enthalten.

3. Additionsvernetzende Siliconzusammensetzungen gemäß Anspruch 1 oder 2, **dadurch gekennzeichnet, dass** sie als weiteren Bestandteil
(v) mindestens eine Verbindung (G) ausgewählt aus der Gruppe enthaltend inaktive Füllstoffe, harzartige Polyorganosiloxane, die von den Siloxanen (A), (C) und (K) verschieden sind, Silane die von (H) verschieden sind, Inhibitoren, Stabilisatoren, verstärkende und nicht verstärkende Füllstoffe, Fungizide, Duftstoffe, rheologische Additive, Korrosionsinhibitoren, Oxidationsinhibitoren, Lichtschutzmittel, flammabweisend machende Mittel und Mittel zur Beeinflussung der elektrischen Eigenschaften, Dispergierhilfsmittel, Lösungsmittel, Haftvermittler, Pigmente, Farbstoffe, Weichmacher, organische Polymere, Hitzestabilisatoren oder deren Mischungen enthalten.

4. Additionsvernetzende Siliconzusammenzetzungen gemäß einem der Ansprüche 1 bis 3, **dadurch gekennzeichnet, dass** der Platinkatalysator (E) durch UV-Licht aktiviert wird.

5. Erstellung der additionsvernetzenden Siliconzusammensetzungen gemäß einem der Ansprüche 1 bis 4, **dadurch gekennzeichnet, dass** alle Komponenten gleichmäßig vermischt werden.

6. Verwendung der additionsvernetzenden Siliconzusammensetzungen gemäß einem der Ansprüche 1 bis 4 als Klebstoff, als Vergussmasse, als Dichtungsmaterial.

## Claims

1. Addition-crosslinking silicone compositions comprising
(i) at least one compound selected from the group containing the compounds (A), (C), and (K),
where
(A) is an organosilicon compound comprising at least two radicals having aliphatic carbon-carbon multiple bonds,
(C) is an organosilicon compound comprising at least two Si-bonded hydrogen atoms, and
(K) is an organosilicon compound comprising SiC-bonded radicals having aliphatic carbon-carbon multiple bonds and Si-bonded hydrogen atoms,
with the proviso that the composition comprises at least one compound having aliphatic carbon-carbon multiple bonds and at least one compound having Si-bonded hydrogen atoms,
(ii) at least one platinum catalyst (E) in catalytic amounts, and
(iii)at least one α-silane (H) of the general formula (I)
Y-CH₂-SiR'ₙ (OR)₃₋ₙ (I)
where
Y is a glycidyloxy-, methacryloyloxy-, vinyl-,
R is an alkyl, or substituted alkyl, acetoxy, propionyloxy having 1-6 carbon atoms,
R' is a methyl group, and
n is a 0 or 1.

2. Addition-crosslinking silicone compositions according to Claim 1, **characterized in that** they comprise as further constituent
(iv) at least one mechanically reinforcing filler (F).

3. Addition-crosslinking silicone compositions according to Claim 1 or 2, **characterized in that** they comprise as further constituent
(v) at least one compound (G) selected from the group containing inert fillers, resinlike polyorganosiloxanes other than the siloxanes (A), (C), and (K), silanes other than (H), inhibitors, stabilizers, reinforcing and nonreinforcing fillers, fungicides, fragrances, rheological additives, corrosion inhibitors, antioxidants, light stabilizers, flame retardants, agents for influencing the electrical properties, dispersing assistants, solvents, adhesion promoters, pigments, dyes, plasticizers, organic polymers, heat stabilizers or mixtures thereof.

4. Addition-crosslinking silicone compositions according to any of Claims 1 to 3, **characterized in that** the platinum catalyst (E) is activated by UV light.

5. Preparation of the addition-crosslinking silicone compositions according to any of Claims 1 to 4, **characterized in that** all of the components are uniformly mixed.

6. Use of the addition-crosslinking silicone compositions according to any of Claims 1 to 4 as an adhesive, encapsulant or sealing material.

## Revendications

1. Compositions de silicone réticulables par addition, contenant
(i) au moins un composé choisi dans le groupe contenant les composés (A), (C) et (K),
(A) désignant un composé organosilicié, contenant au moins deux radicaux à liaisons multiples carbone-carbone aliphatiques,
(C) désignant un composé organosilicié, contenant au moins deux atomes d'hydrogène liés à Si, et
(K) désignant un composé organosilicié, contenant des radicaux liés à SiC, à liaisons multiples carbone-carbone aliphatiques, et comportant des atomes d'hydrogène liés à Si,
étant entendu que la composition contient au moins un composé à liaisons multiples carbone-carbone aliphatiques et au moins un composé comportant des atomes d'hydrogène liés à Si,
(ii) au moins un catalyseur au platine (E) en quantités catalytiques et
(iii) au moins un α-silane (H) de formule générale (I)
Y-CH₂-SiR'ₙ(OR)₃₋ₙ (I)
dans laquelle
Y représente un groupe glycidoxy, méthacryloxy, vinyle,
R représente un groupe alkyle ou alkyle substitué, acétoxy, propionyloxy ayant de 1 à 6 atomes de carbone,
R' représente un groupe méthyle, et
n représente 0 ou 1.

2. Compositions de silicone réticulables par addition selon la revendication 1, **caractérisées en ce qu'**elles contiennent comme autre composant
(iv) au moins une charge de renfort mécanique (F).

3. Compositions de silicone réticulables par addition selon la revendication 1 ou 2, **caractérisées en ce qu'**elles contiennent comme autre composant
(v) au moins un composé (G) choisi dans le groupe contenant des charges inactives, des polyorganosiloxanes de type résine, qui sont différents des siloxanes (A), (C) et (K), des silanes qui sont différents de (H), des inhibiteurs, des stabilisants, des charges de renfort et non de renfort, des fongicides, des parfums, des additifs de rhéologie, des agents anticorrosion, des antioxydants, des photoprotecteurs, des agents rendant ignifuge et des agents destinés à influer sur les propriétés électriques, des adjuvants de dispersion, des solvants, des promoteurs d'adhérence, des pigments, des colorants, des plastifiants, des polymères organiques, des stabilisants thermiques ou des mélanges de ceux-ci.

4. Compositions de silicone réticulables par addition selon l'une quelconque des revendications 1 à 3, **caractérisées en ce que** le catalyseur au platine (E) est activé par la lumière UV.

5. Préparation des compositions de silicone réticulables par addition selon l'une quelconque des revendications 1 à 4, **caractérisée en ce qu'**on mélange uniformément tous les composants.

6. Utilisation des compositions de silicone réticulables par addition selon l'une quelconque des revendications 1 à 4, en tant qu'adhésif, en tant que matière à couler, en tant que matériau d'étanchéité.
